# EUROPEAN PATENT APPLICATION

(11) **EP 0 687 592 A1**
(43) Date of publication of application: **20.12.1995**
(21) Application number: 95500074.0
(22) Date of filing: 16.05.1995
(51) Int. Cl.: B60R 1/10

(54) **Improved rearview mirror**

(30) Priority: 13.06.1994 ES 9401643 U
(71) Applicant: Marcos Ibanez, Juan Vicente, E-28001 Madrid (ES)
(72) Inventor: Marcos Ibanez, Juan Vicente, E-28001 Madrid (ES)

(57) **Abstract**

The mirror, comprising a housing (1), similar to any conventional rearview mirror, provided with a rearview mirror (3), designed for automobiles, has at the outer portion (4) of the housing (1) a pair of complementary mirrors (5,6). The mirrors (5,6) are arranged in such a way that light (8) from objects in front of the vehicle is reflected in one mirror (5) to the second mirror (6) and then on towards the driver's seat. This enables the driver to see the road in front of the vehicle when, for example, the view is blocked by a truck.

## Description

### SUBJECT OF THE INVENTION

The invention consists of a rearview mirror of the type used in automobiles, substantially improved in a manner that, parallel to its function as a rearview element, it offers the driver front vision from a more favourable angle, particularly in the event of overtakings.

### BACKGROUND OF THE INVENTION

As we know, in addition to a series of other fittings aimed at improving the safety conditions while driving, automobiles are provided with a rearview mirror installed on the side of the car nearest to and immediately in front of the driver and which, substantially jutting out, allows a rear view of the road and, by way of example and basic advantage, permits visual control of cars driving behind, without the need to turn one's head by 180 degrees in order to check certain specific situations, such as, for example, the beginning of an overtaking manoeuvre, evidently one of the most risky moves.

However, it is also evident that, during such overtaking manoeuvres, not only is it necessary to keep an eye on the cars that are driving behind and may have initiated a move to overtake one's automobile; it is also and even more essential to control those coming from the opposite direction.

On some occasions, such as, for example, when one is driving behind a large vehicle like a truck or a bus, it is difficult to have a proper front view, and the driver may be forced to move his body and especially his head towards the window, or even to stick his head out of it, which the consequent adverse effect on driving safety conditions. Sometimes, it may even be necessary to move the car over to the lift side of the road in order to obtain the desired view, with the additional risk entailed by this manoeuvre.

### DESCRIPTION OF THE INVENTION

As a result of improvements of the invention, the rearview mirror presented in this report provides a totally satisfactory solution for the problems set out before, achieving a substantial improvement of the front visibility conditions, without the need for the driver to carry out any odd manoeuvre with the car or with his own body.

To this end, the specific structure of the rearview mirror has been based on the fundamental elements of a conventional rearview mirror, that is to say, a frame provided with detachable or non-detachable coupling elements to the car body, a frame in which the traditional rearview mirror is installed, the latter, in turn, being provided with manual, mechanized or other means of adjustment, the special characteristic of the said rearview mirror being that it leaves free a segment of the frame, preferably in the external marginal sector, where the said frame must be fitted in its base with a window, either open or closed by means of a transparent element, while, immediately behind this window, a mirror is installed oriented simultaneously to the front and towards a second mirror which, in turn, is oriented to the rear and towards the car, more specifically towards the driver's head, so that the combination of these two mirrors allow the observation angle to be moved substantially to the outside, namely towards the point where the rearview mirror is installed and which, being outside the car, result in a considerable improvement of visibility conditions in front.

As is obvious, this pair of complementary mirrors are installed on adjustable supports allowing their adequate orientation, depending on the body height of the driver and the exact position of the driver's seat.

The adjustment of this pair of complementary mirrors, whether in combination or separately, can be carried out manually, mechanically or in any other way, the same as with the traditional rearview mirror, as explained before.

### DESCRIPTION OF THE DRAWINGS

To complete the description given in this report and in order to guarantee a better understanding of the characteristics of this invention, a set of drawings is attached to this descriptive report, as an integral part of the same, in which, by way of illustration and in no of a restricting nature, the following is represented:

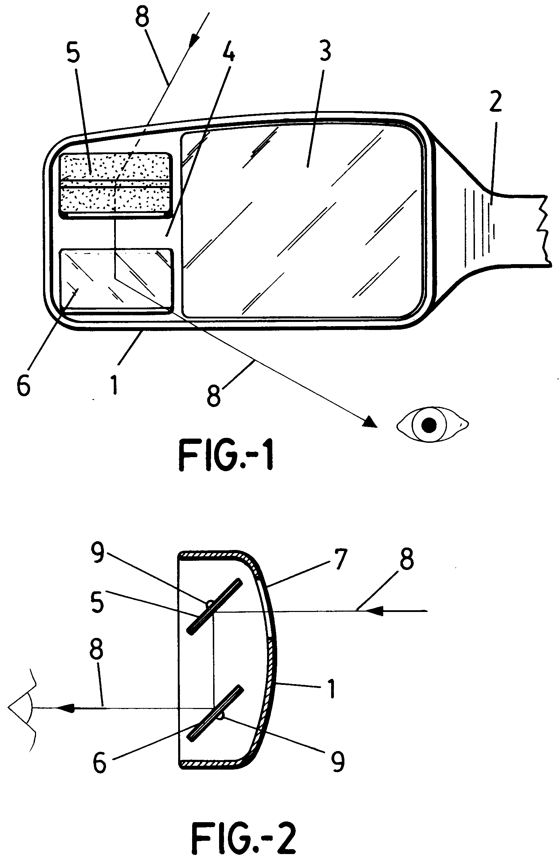

Figure 1 is a front profile schematic representation of a rearview mirror built in accordance with the improvements incorporated in this invention.

Figure 2 is a detail of a cross-sectional schematic representation of the mirror shown in the figure at the level of the pair of complementary mirrors on which the invention is based and which offer the driver the front view.

### PREFERENTIAL CONSTRUCTION OF THE INVENTION

With the help of these figures, it can be seen that the rearview mirror presented here is structured, the same as any conventional rearview mirror, starting from a frame (1) made of a kind of bowl with its concavity oriented to the rear, and provided with a side arm (2) for its coupling to the car body, with the possibility of its orientation either towards the actual frame (1) or towards the rearview mirror itself (3), installed in its inside, the latter solution presently being the more widely applied, since it prevents the rearview mirror itself (3) from losing its proper orientation in the event of an impact on the frame (1), which occurs rather frequently, for example, as a result of pedestrians bumping into the parked car.

Now, as has been explained before and in accordance with the subject of the invention, the actual rearview mirror (2) leaves free an ample space (4), preferably situated in the external marginal zone of the bowl (1), and in this space (4) a pair of complementary mirrors (5) and (6) is installed, in such a way that one of these mirrors, mirror (5) for example, is oriented at the same time towards the other mirror (6) and towards the front, to which end, in the base of the frame (1), in the area facing the said mirror (5), a window has been installed, preferably supported by a transparent plate, in order to avoid or to reduce the access of dirt to the set of mirrors (5-6) while the car is driving.

The mirror (6) is placed in a position opposite to the mirror (1), so that it is oriented towards the first mirror (5) and towards the rear, though with sufficient inclination to ensure that the optical axis is directed towards the driver's seat and more specifically towards the driver's head, as is shown in the schematic representation of the figures.

Consequently, the optical line, indicated in the figure with the number (8), starts in a forward direction, coinciding with the progression of the car itself, from mirror (5), in other words, from a position considerably removed in a lateral direction with respect to the driver's seat, to such an extent that it is situated outside the car, thus resulting in optimum visibility conditions in this respect, as has been explained before.

As was also said before, this pair of complementary mirrors (5-6) must be installed on their respective adjustable supports (9) which connect them to the frame (1) and make it possible to adjust them at all times to the ideal position to make sure that the images obtained by the first mirror (5) by way of the optical line (8) reach the head of the driver, whatever the latter's driving position inside the car.

We believe no further detail is needed for any expert on the subject to understand the importance of the invention and its advantages.

The materials, the form, the size and the positioning of the elements may be subject to modifications, provided always that this does not alter the basic characteristics of the invention.

The terms in which this report has been drawn up must at all times be understood in their most ample sense and without any restricting nature.

## Claims

**1.-** Improved rearview mirror, specifically designed for automobiles and of the type incorporating a frame (1) provided with coupling elements (2) to the body of the vehicle, the said frame being in the form of a kind of bowl with its concavity oriented to the rear and in whose base the actual rearview mirror (3) is installed, its basic characteristic being that this mirror leaves free an ample sector (4) of the said frame (1), preferably the external marginal sector, and in the said sector (4) a pair of complementary mirrors (5) and (6), adequately facing each other while, at the same time, one of them is oriented towards the front and the other towards the driver's seat, with a provision for the incorporation in the frame, in the area in front of mirror (5) and oriented towards the front, of a window (7), preferably closed by means of a transparent plate, all this in such a manner that, with the help of this pair of mirrors (5) and (6), a substantial lateral displacement is achieved of the driver's visual angle towards the front.

**2.-** Improved rearview mirror, in accordance with claim number 1, characterized by the fact that the said pair of complementary mirrors (5) and (6) is installed on their respective adjustable supports (9) which, in combination or separately and by means of manual, mechanical or any other elements, allow adequate orientation of the said mirrors (5) and (6) in accordance with the specific position of the driver's head in his seat.
